# FASCICULE DE BREVET EUROPEEN

(11) **EP 2 020 610 B1**
(45) Date de publication et mention de la délivrance du brevet: **06.04.2011**
(21) Numéro de dépôt: 08160580.0
(22) Date de dépôt: 17.07.2008
(51) Int. Cl.: G02B 6/00, B60Q 1/00

(54) **Dispositif d'éclairage comportant un guide de lumière coudé équipé de moyens pour exploiter les fuites de lumière**
Beleuchtungsvorrichtung, die einen gebogenen Lichtwellenleiter umfasst, der mit Mitteln zur Ausnutzung des Streulichts ausgestattet ist
Lighting device comprising an L-shaped light guide equipped with means for exploiting light leaks

(30) Priorité: 03.08.2007 FR 0705714
(43) Date de publication de la demande: 04.02.2009
(73) Titulaire: VALEO VISION, 93012 Bobigny (FR)
(72) Inventeur: De Lamberterie, Antoine, 75019, PARIS (FR)

(56) Documents cités:
- EP-A- 1 867 913
- DE-A1- 10 162 105
- DE-A1-102005 042 523
- US-A1- 2003 099 113

## Description

L'invention se rapporte à un dispositif d'éclairage et/ou de signalisation, notamment pour un véhicule automobile, qui comporte un guide linéaire de lumière.

L'invention se rapporte plus particulièrement à un dispositif d'éclairage et/ou de signalisation, notamment pour un véhicule automobile, qui est susceptible d'émettre un faisceau lumineux longitudinal et qui comporte au moins une source lumineuse émettant des rayons lumineux et au moins un guide linéaire de lumière à l'intérieur duquel se propagent globalement axialement les rayons lumineux émis par la source lumineuse, le guide de lumière comportant :
- au moins une première face d'extrémité d'introduction de la lumière émise par la source lumineuse ;
- au moins un tronçon d'émission comportant une surface latérale formant une face d'émission du faisceau lumineux ;
- au moins un premier coude qui est interposé entre la première face d'introduction et le tronçon d'émission et qui présente un coin saillant vers l'extérieur qui est biseauté en présentant au moins une première facette afin de réfléchir totalement une première partie les rayons lumineux incidents axialement à l'intérieur du tronçon d'émission, l'autre partie des rayons lumineux fuyant à l'extérieur du guide de lumière à travers lesdites au moins une facette biseautée.

Un tel dispositif est divulgué dans le document US 2003/0099113.

Dans le domaine de l'éclairage et de la signalisation de véhicules automobiles, il est de plus en plus fréquent d'utiliser des guides de lumière, aussi appelés guides optiques.

Un guide de lumière est, très schématiquement, un élément allongé réalisé en un matériau transparent présentant un fort indice de réfraction, généralement de section de type cylindrique ou analogue. A proximité de l'une des extrémités du guide de lumière, appelée face d'introduction de la lumière dans le guide, est disposée au moins une source lumineuse, par exemple une source lumineuse de petite taille du type diode électroluminescente.

Les rayons lumineux émis par cette source lumineuse pénètrent à l'intérieur du guide de lumière par l'intermédiaire de la face d'introduction, puis ils se propagent par réflexion totale sur les face cylindriques du guide selon une direction globalement axiale le long du guide de lumière en direction de son extrémité opposée.

Le guide de lumière comporte aussi un tronçon d'émission qui est destiné à émettre le faisceau lumineux. A cet effet, une face latérale arrière du tronçon d'émission comporte des éléments réfléchissants tels que des prismes, ou encore des foyers de diffusion, qui modifient l'orientation d'une partie des rayons lumineux se propageant dans le guide de lumière de manière qu'ils sortent par une face cylindrique avant, dite surface d'émission, du tronçon d'émission pour former le faisceau lumineux. Le guide de lumière émet ainsi de la lumière sur toute la longueur du tronçon d'émission.

Un tel guide de lumière présente l'avantage de pouvoir être conformé en diverses formes géométriques rectilignes ou courbes. La surface d'émission du guide de lumière peut ainsi être agencée dans des zones peu accessibles du projecteur ou du feu du véhicule. Le guide de lumière participe ainsi fortement au style du projecteur ou du feu.

Lorsque le guide de lumière est agencé dans une zone peu accessible du feu ou du projecteur du véhicule, il arrive que la source lumineuse doive être déportée et éloignée de la surface d'émission du guide de lumière.

Ces guides adoptent alors souvent des formes compliquées, avec des coudes par exemple, ce qui conduit souvent à des fuites de lumière non voulues au niveau de ces coudes, donc à une perte du rendement lumineux global du dispositif d'éclairage. En effet, les rayons lumineux qui se propagent à l'intérieur du guide de lumière sont susceptibles d'atteindre la face latérale du coude avec un angle inférieur à l'angle limite de réfraction, c'est-à-dire supérieur à l'angle de réflexion totale.

Les rayons lumineux qui fuient de manière intempestive hors du guide de lumière par les coudes risquent de former un pinceau lumineux qui est susceptible d'être perçu comme un point lumineux d'intensité élevée aussi appelé point chaud ou "hot spot" en langue anglaise. Le point chaud produit un effet inesthétique qui perturbe l'homogénéité du faisceau lumineux émis par le guide de lumière.

Ce problème se rencontre notamment dans les guides de lumière conformés en une boucle fermée ou quasiment fermée, puisqu'il faut alors injecter la lumière dans ces guides en un point, associé généralement à une partie coudée.

De plus, le pinceau lumineux formé par les rayons fugitifs est susceptible d'être orienté dans une direction différente de celle du faisceau lumineux en fonction de l'orientation du coude.

Ainsi, le point chaud peut être perceptible par un observateur qui est excentré par rapport au faisceau lumineux. Pour cet observateur, le guide de lumière présente alors un aspect éteint sur toute sa longueur avec un point lumineux qui apparaît à l'emplacement du coude.

Inversement, un observateur situé dans l'axe du faisceau lumineux est susceptible de percevoir une "zone sombre" à l'emplacement du coude lorsque les rayons lumineux fuient selon une direction différente de celle du faisceau lumineux. Pour cet observateur, le guide de lumière présente alors un aspect allumé avec une zone sombre voire éteinte pour l'observateur situé dans l'axe du faisceau. Ceci est d'autant plus flagrant lorsque le tronçon d'émission du guide de lumière est censé former une boucle fermée.

Pour résoudre ce problème, il est connu de réaliser une facette biseautée dans la partie saillante vers l'extérieur du coude. Les rayons lumineux se propageant vers le coude depuis la face d'introduction sont alors réfléchis vers l'intérieur du guide de lumière par réflexion totale sur la facette biseautée.

Cette solution permet de diminuer la quantité de rayons lumineux qui fuient par le coude. Cependant, une proportion sensible de rayons lumineux fuit toujours par la facette biseautée. Le point chaud créé par ces rayons lumineux fugitifs demeure perceptible par un observateur.

Il est aussi connu de réaliser plusieurs facettes dans la partie saillante du coude afin d'augmenter la quantité de rayons lumineux réfléchis par réflexion totale sur les facettes biseautées.

Cependant, les rayons lumineux fugitifs forment encore un point chaud qui, bien que atténué, est toujours perceptible par un observateur.

Pour résoudre notamment ce problème, l'invention propose un dispositif d'éclairage du type décrit précédemment, caractérisé en ce qu'il comporte des moyens pour modifier l'orientation des rayons lumineux fugitifs afin que les rayons lumineux fugitifs complètent de manière homogène et continue le faisceau lumineux émis par la face d'émission du guide de lumière.

Selon d'autres caractéristiques de l'invention :
- un prisme est associé à chacune desdites au moins une facette biseautée, et le prisme comportant une face d'entrée de la lumière qui est agencée en vis-à-vis de ladite au moins une facette biseautée associée de manière que les rayons lumineux fugitifs entrent à l'intérieur du prisme et une face de sortie des rayons lumineux fugitifs, la face de sortie étant conformée de manière à répartir les rayons lumineux fugitifs par réfraction autour de la direction globale du faisceau lumineux pour compléter le faisceau lumineux de manière homogène ;
- les rayons lumineux fugitifs sont déviés par réfraction lors de leur passage à travers la face d'entrée de manière à être orientés de manière globalement longitudinale lors de lorsqu'ils atteignent la face de sortie du prisme ;
- la face d'entrée du prisme est inclinée par rapport à ladite au moins une facette biseautée associée du guide de lumière ;
- le prisme comporte une face de réflexion qui est susceptible de dévier en direction de la face de sortie par réflexion totale les rayons lumineux fugitifs qui sont entrés dans le prisme ;
- le coude du guide de lumière comporte au moins deux facettes biseautées, et le premier prisme et le deuxième prisme associés à chacune desdites au moins deux facettes biseautées étant réalisés venu de matière en une seule pièce ;
- le premier prisme et le deuxième prisme comportent une face commune de sortie ;
- le guide de lumière comporte une deuxième face d'extrémité d'introduction de la lumière émise par une deuxième source lumineuse qui est opposée à la première face d'extrémité d'introduction, et le guide de lumière comporte aussi un deuxième coude qui est interposé entre la deuxième face d'entrée et le tronçon d'émission et qui présente un coin saillant vers l'extérieur qui est biseauté en présentant au moins une première facette afin de réfléchir en partie les rayons lumineux incidents axialement à l'intérieur du tronçon d'émission, l'autre partie des rayons lumineux fuyant à l'extérieur du guide de lumière à travers la facette biseautée, le tronçon d'émission du guide de lumière étant conformé en une boucle ouverte de manière que le deuxième coude soit agencé à proximité du premier coude, et les prismes associés à chacune desdites au moins une facettes biseautées des deux coudes étant réalisés venus de matière en une seule pièce de manière à fermer la boucle formée par le tronçon d'émission.

D'autres caractéristiques et avantages apparaîtront au cours de la lecture de la description détaillée qui va suivre pour la compréhension de laquelle on se reportera aux dessins annexés parmi lesquels :
- la figure 1 est une vue en perspective qui représente un dispositif d'éclairage réalisé selon l'état de la technique qui comporte un guide de lumière présentant deux coudes équipés de facettes biseautées ;
- la figure 2 est une vue de détail à plus grande échelle de la figure 1 qui représente les coudes à facettes biseautées ;
- la figure 3 est une vue en coupe longitudinale qui représente un coude à facettes biseautées qui est équipé d'un élément prismatique réalisé selon les enseignements de l'invention ;
- la figure 4 est une vue en perspective qui représente l'élément prismatique de la figure 3 ;
- la figure 5 est vue en opposition de l'élément prismatique de la figure 4.

Dans la suite de la description, des éléments identiques, analogues ou similaires seront désignés par des mêmes numéros de référence.

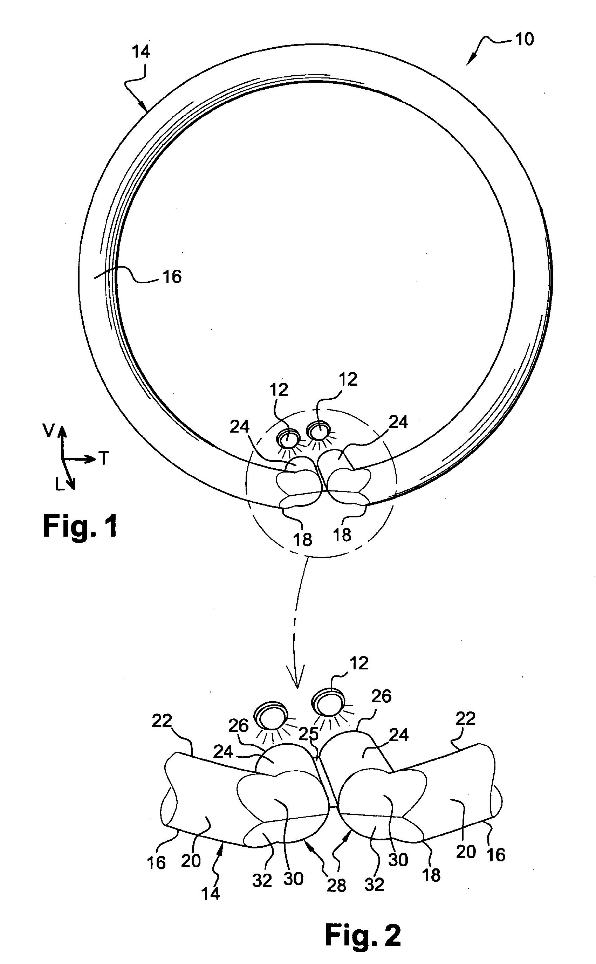

Dans la suite de la description, on adoptera de manière non limitative des orientations longitudinale dirigée d'arrière en avant, verticale dirigée de bas en haut et transversale dirigée de gauche à droite, qui sont indiquées par le trièdre "L,V,T" de la figure 1.

On a représenté à la figure 1 un dispositif 10 d'éclairage et/ou de signalisation pour un véhicule automobile qui est susceptible d'émettre un faisceau lumineux longitudinal de forme annulaire vers l'avant.

Le dispositif d'éclairage 10 comporte au moins une source lumineuse 12, et de préférence deux sources lumineuses 12 dont chacune est susceptible d'émettre un cône de rayons lumineux selon un axe moyen orienté longitudinalement vers l'avant. Ces sources peuvent être constituées comme dans l'exemple représenté par des diodes électroluminescentes, par des embouts de fibres optiques, etc.

Le dispositif 10 comporte aussi un guide linéaire de lumière 14, encore appelé guide optique, qui est agencé longitudinalement en avant des sources lumineuses 12. Le guide de lumière 14 présente la forme d'un cylindre allongé d'axe curviligne.

Le guide de lumière 14 comporte plus particulièrement un tronçon intermédiaire 16 dit d'émission qui est conformé en une boucle annulaire qui s'étend dans un plan vertical transversal. Les deux extrémités axiales 18 du tronçon d'émission 16 ne sont pas jointives, le tronçon d'émission 16 forme ainsi un jonc qui est ouvert dans sa partie inférieure.

La forme annulaire du tronçon d'émission 16 du guide de lumière 14 permet de le disposer autour d'un module optique (non représenté) d'un projecteur de véhicule automobile.

Comme représenté à la figure 2, le tronçon d'émission 16 est délimité longitudinalement vers l'avant par une surface latérale formant une face d'émission 20 du faisceau lumineux, tandis qu'il est délimité longitudinalement vers l'arrière par une surface latérale de déviation 22 qui comporte des moyens (non représentés) pour orienter les rayons lumineux qui atteignent la surface de déviation 22 vers la face d'émission 20 pour former le faisceau lumineux. Les moyens pour dévier les rayons lumineux sont par exemple des faces prismatiques ou des foyers de diffusion de la lumière.

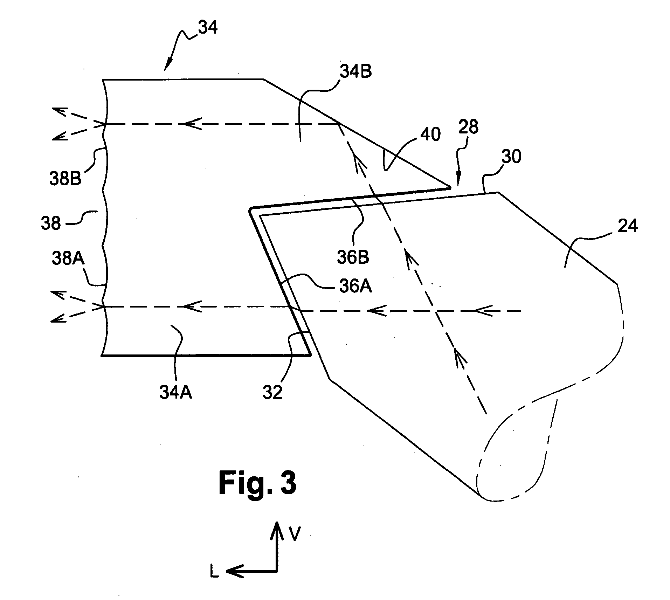

Le guide de lumière 14 comporte aussi deux tronçons rectilignes d'extrémité 24 qui s'étendent longitudinalement vers l'arrière depuis chacune des extrémités axiales 18 non jointives du tronçon d'émission 16, comme illustré à la figure 2. Plus précisément, les deux tronçons d'extrémité 24 sont légèrement inclinés vers le bas par rapport à la direction longitudinale, comme représenté à la figure 3. Les deux tronçons d'extrémité 24 sont avantageusement agencés parallèlement entre eux et à proximité l'un de l'autre.

Pour rigidifier le guide de lumière 14, une nervure horizontale 25 relie les deux tronçons d'extrémité 24. Ainsi, le tronçon d'émission 16 présente la rigidité d'un anneau fermé, comme représenté à la figure 2.

Chaque tronçon d'extrémité 24 comporte une extrémité arrière libre présentant une face transversale d'introduction 26 de la lumière 20 qui est agencée à proximité d'une source lumineuse 12 associée.

Selon une variante non représentée du guide de lumière 14, le tronçon d'émission forme un anneau complètement fermé sur lui-même depuis un tronçon duquel s'étend longitudinalement vers l'arrière un unique tronçon d'extrémité.

La jonction entre chaque tronçon d'extrémité 24 et le tronçon d'émission 16 forme un coude 28. Dans l'exemple représenté à la figure 1, le coude 28 forme un angle droit. Chaque coude 28 est ainsi interposé entre la face d'introduction de la lumière 26 associée et le tronçon d'émission 16.

Chaque coude 28 présente un coin saillant vers l'extérieur qui est biseauté en présentant au moins une facette biseautée qui est susceptible de réfléchir totalement la majeure partie des rayons lumineux se propageant dans le guide de lumière 14.

Dans l'exemple représenté aux figures 1 à 3, chaque coude 28 comporte une première facette biseautée supérieure 30 et une deuxième facette biseautée inférieure 32 qui sont adjacentes et jointes par une arête. La facette biseautée supérieure 30 est sensiblement horizontale et elle est tournée vers le haut tandis que la facette biseautée inférieure 32 est inclinée sensiblement à 45° et tournée vers le bas. Comme représentée à la figure 3, les facettes biseautées 30, 32 forment ainsi un profil en "V" dont la pointe est orientée longitudinalement vers l'avant et légèrement vers le haut.

Le guide de lumière 14 est réalisé en un matériau transparent présentant un indice de réfraction plus élevé que l'atmosphère dans laquelle le guide de lumière 14 est destiné à être utilisé de manière que l'angle limite de réfraction des rayons lumineux se propageant à l'intérieur du guide de lumière 14 soit faible afin de favoriser la réflexion totale desdits rayons lumineux contre la face cylindrique du guide de lumière 14.

De manière connue, des rayons lumineux émis par chacune des sources lumineuses 12 pénètrent à l'intérieur du guide de lumière 14 par la face associée d'introduction 26. Les rayons lumineux se propagent alors le long du tronçon d'extrémité 24 jusqu'au coude 28 associé.

Lorsque les rayons lumineux atteignent le coude 28, une partie des rayons lumineux est réfléchie par réflexion totale sur les facettes biseautées 30, 32 vers l'intérieur du tronçon d'émission 16.

Une autre partie des rayons lumineux fuit à l'extérieur du guide de lumière 14 à travers l'une des facettes biseautées 30 ou 32 du coude 28 associé. Ces rayons lumineux qui seront appelés par la suite "rayons lumineux fugitifs", sont représentés en traits interrompus à la figure 3.

Les rayons lumineux (non représentés) réfléchis vers l'intérieur du tronçon d'émission 16 se propagent le long du tronçon d'émission 16 jusqu'à ce qu'ils soient déviés par la face arrière vers la face avant d'émission. Lorsque les rayons lumineux ainsi déviés atteignent ainsi la face avant d'émission avec un angle inférieur à l'angle limite de réfraction, les rayons lumineux sortent du guide de lumière 14 avec une orientation globalement longitudinale pour former le faisceau lumineux. Ainsi, un observateur situé dans l'axe du faisceau lumineux voit le tronçon d'émission 16 qui est allumé à la manière d'un tube néon.

Cependant, les rayons lumineux fugitifs associés à chaque facette biseautée forment deux pinceaux lumineux de forte intensité par rapport au faisceau lumineux qui sont susceptibles d'être perçus comme des points chauds dans le guide de lumière 14. Ces points chauds constituent une perte de rayons lumineux, qui auraient dû participer à la photométrie du faisceau lumineux.

De plus, les points chauds forment une inhomogénéité inesthétique dans l'apparence du faisceau lumineux dans l'axe et en hauteur.

En outre, le pinceau lumineux associé à la facette supérieure 30 est incliné vers le haut par rapport à la direction du faisceau lumineux.

L'invention propose d'exploiter ces rayons fugitifs en équipant le guide de lumière 14 avec des moyens pour modifier l'orientation des rayons lumineux fugitifs afin que les rayons lumineux fugitifs complètent de manière homogène et continue le faisceau lumineux émis par la surface latérale du guide de lumière 14. En d'autres termes, il est d'une part préférable que les rayons lumineux fugitifs soient orientés selon une direction globalement longitudinale vers l'avant afin d'être dans l'axe du faisceau lumineux, et il est d'autre part préférable que les rayons lumineux soient répartis dans différentes directions de manière à ne pas former un point chaud.

A cet effet, un prisme est associé à chacune des facettes biseautées 30, 32 du guide de lumière 14. Ainsi, chaque coude 28 du guide de lumière 14 est associé à deux prismes 34A, 34B. Deux prismes 34A, 34B associés à un coude 28 sont représentés à la figure 3. Les deux autres prismes associés aux facettes biseautées 30, 32 de l'autre coude 28 sont identiques à ceux-ci et ne seront donc pas décrit individuellement par la suite.

Chaque prisme 34A, 34B est réalisé en un matériau transparent présentant un fort indice de réfraction. Chaque prisme 34A, 34B est par exemple réalisé dans le même matériau que le guide de lumière 14.

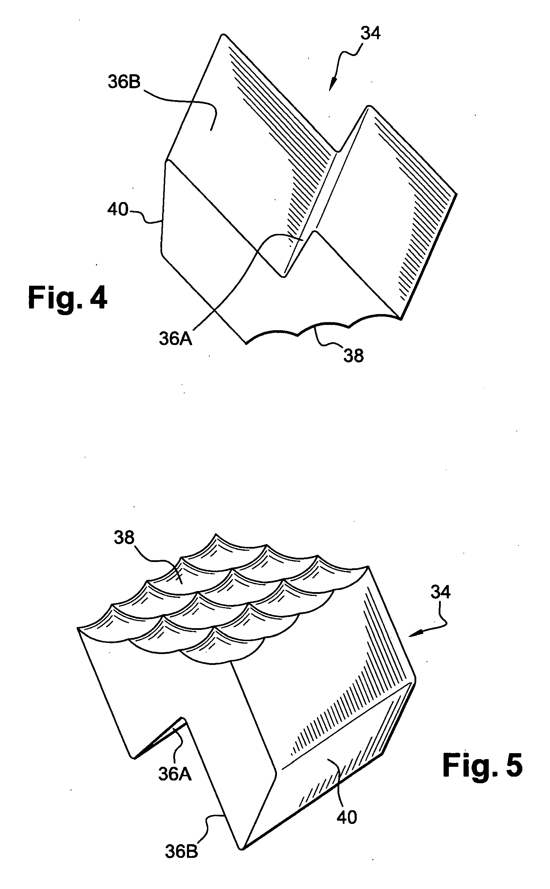

Dans l'exemple représenté aux figures 3 à 5, les quatre prismes 34A, 34B des deux coudes 28 sont réalisés venus de matière en une seule pièce 34 formant un élément prismatique comme représenté aux figures 4 et 5.

Comme illustré à la figure 3, le premier prisme 34A qui est associé à la facette biseauté inférieure 32, comporte une face arrière d'entrée 36A de la lumière qui est agencée en vis-à-vis de ladite facette biseautée inférieure 32 et une face verticale transversale avant de sortie 38A des rayons lumineux fugitifs.

Dans l'exemple représenté aux figures, la face d'entrée 36A des rayons lumineux fugitifs dans le premier prisme 34A est parallèle à la facette biseautée inférieure 32. La face d'entrée 36A a été représentée agencée à distance de la facette biseautée inférieure 32, cependant, on comprendra que la face d'entrée 36A peut être plaquée contre la facette biseautée 32 associée, la rugosité des deux surfaces suffisant à maintenir une distance telle que la facette biseautée inférieure 32 soit toujours apte à réfléchir totalement une partie des rayons lumineux incidents.

Les rayons lumineux fugitifs sortant de la facette biseautée inférieure 32 sont sensiblement orientés longitudinalement vers l'avant, il n'est donc pas utile de les dévier fortement.

Les rayons lumineux fugitifs sont ainsi légèrement déviés par réfraction lors de leur passage à travers la face d'entrée 36A, comme illustré à la figure 3, afin d'avoir une orientation moyenne encore plus proche de l'axe longitudinal du faisceau lumineux.

Selon une variante non représentée de l'invention, il est aussi possible d'accentuer la déviation par réfraction des rayons lumineux lors de leur passage à travers la face d'entrée 36A du premier prisme 34A en inclinant la face d'entrée 36A du prisme 34A par rapport à la facette biseautée associée du guide de lumière 14.

La face de sortie 38A est conformée de manière à répartir les rayons lumineux fugitifs par réfraction en éclatant les rayons lumineux dans un cône d'axe longitudinal afin d'éviter la formation d'un point chaud.

Avantageusement, la face de sortie 38A est conformée de manière que les rayons lumineux fugitifs présentent une répartition similaire à celle des rayons lumineux formant le faisceau lumineux de manière à compléter de manière homogène le faisceau lumineux formé par le tronçon d'émission 16.

A cet effet, la face de sortie 38A présente ici des motifs optiques, par exemple des stries, pour répartir horizontalement et/ou verticalement les rayons lumineux fugitifs sortants dans un cône d'axe longitudinal de manière qu'un observateur ne puisse pas distinguer de différence d'intensité entre les rayons lumineux provenant du tronçon d'émission 16 du guide de lumière 14 et les rayons lumineux fugitifs provenant du premier prisme 34A.

Le deuxième prisme 34B comporte aussi une face d'entrée 36B parallèle à la facette biseautée supérieure 30 et une face de sortie 38B qui s'étend dans un plan vertical transversal.

Comme représenté à la figure 4, la face d'entrée 36A du premier prisme 34A forme ainsi avec la face d'entrée 36B du deuxième prisme 34B une cornière présentant la forme d'une empreinte négative des facettes biseautées 30, 32 du coude 28 associé.

Cependant, la facette biseautée supérieure 30 s'étend dans un plan sensiblement horizontal. L'orientation des rayons lumineux fugitifs sortant par la facette biseautée supérieure 30 forme donc avec l'axe longitudinal un angle tel qu'il n'est pas possible de les dévier suffisamment par réfraction à travers la face d'entrée 36B du deuxième prisme 34B.

Pour résoudre ce problème, le deuxième prisme 34B comporte une face de réflexion 40 qui est susceptible de dévier par réflexion totale et en direction de la face de sortie 38B du prisme 34B les rayons fugitifs incidents qui sont entrés dans le prisme 34B.

La face de réflexion 40 s'étend dans un plan transversal incliné sensiblement à 45° par rapport à la verticale sur la trajectoire des rayons lumineux fugitifs qui entrent dans le prisme 34B par la face d'entrée 36B.

L'angle formé par la face de réflexion avec la verticale est plus précisément tel que les rayons lumineux fugitifs sont réfléchis en direction de la face de sortie 38B avec une orientation sensiblement longitudinale.

La face de sortie 38B du deuxième prisme 34B est conformée de la même manière que la face de sortie 38A du premier prisme 34A de manière à éclater et répartir les rayons lumineux fugitifs pour éviter la formation d'un point chaud.

Avantageusement, et comme représenté aux figures 3 et 5, la face de sortie 38A, 38B des deux prismes 34B est une face commune 38 qui s'étend dans le même plan. Ainsi, le faisceau lumineux sortant présente un aspect homogène.

L'élément prismatique 34 formé par les quatre prismes 34A, 34B est agencé sur les facettes biseautées 30, 32 des coudes 28 de manière à fermer l'anneau formé par le tronçon d'émission 16.

Grâce aux prismes 34A, 34B réalisés selon les enseignements de l'invention, le dispositif d'éclairage 10 présente l'aspect d'un anneau fermé éclairant de manière homogène sans présenter de point chaud ni de point lumineux excentré.

De plus, le rendement lumineux du dispositif 10 est amélioré par la récupération des rayons lumineux fugitifs pour compléter le faisceau lumineux émis par le tronçon d'émission.

## Revendications

1. Dispositif (10) d'éclairage et/ou de signalisation, notamment pour un véhicule automobile, qui est susceptible d'émettre un faisceau lumineux longitudinal et qui comporte au moins une source lumineuse (12) émettant des rayons lumineux et au moins un guide linéaire de lumière (14) à l'intérieur duquel se propagent globalement axialement les rayons lumineux émis par la source lumineuse (12), le guide de lumière (14) comportant :
- au moins une première face (26) d'extrémité d'introduction de la lumière émise par la source lumineuse (12) ;
- au moins un tronçon d'émission (16) comportant une surface latérale formant une face d'émission (20) du faisceau lumineux ;
- au moins un premier coude (28) qui est interposé entre la première face d'introduction (26) et le tronçon d'émission (16) et qui présente un coin saillant vers l'extérieur qui est biseauté en présentant au moins une première facette (30, 32) afin de réfléchir totalement une première partie les rayons lumineux incidents axialement à l'intérieur du tronçon d'émission (16), l'autre partie des rayons lumineux fuyant à l'extérieur du guide de lumière (14) à travers lesdites au moins une facette biseautée (30, 32) ;
**caractérisé en ce qu'**il comporte des moyens (34A, 34B) adaptés pour modifier l'orientation des rayons lumineux fugitifs afin que les rayons lumineux fugitifs complètent de manière homogène et continue le faisceau lumineux émis par la face d'émission (20) du guide de lumière (14).

2. Dispositif (10) selon la revendication précédente, **caractérisé en ce qu'**un prisme (34A, 34B) est associé à chacune desdites au moins une facette biseautée (30, 32), et **en ce que** le prisme (30, 32) comporte une face d'entrée (36A, 36B) de la lumière qui est agencée en vis-à-vis de ladite au moins une facette biseautée (30, 32) associée de manière que les rayons lumineux fugitifs entrent à l'intérieur du prisme (34A, 34B) et une face de sortie (38A, 38B) des rayons lumineux fugitifs, la face de sortie (38A, 38B) étant conformée de manière à répartir les rayons lumineux fugitifs par réfraction autour de la direction globale du faisceau lumineux pour compléter le faisceau lumineux de manière homogène.

3. Dispositif (10) selon la revendication précédente, **caractérisé en ce que** les rayons lumineux fugitifs sont déviés par réfraction lors de leur passage à travers la face d'entrée (36A) de manière à être orientés de manière globalement longitudinale lorsqu'ils atteignent la face de sortie (38A) du prisme (34A).

4. Dispositif (10) selon la revendication précédente, **caractérisé en ce que** la face d'entrée (36A) du prisme (34A) est inclinée par rapport à ladite au moins une facette biseautée (32) associée du guide de lumière (14).

5. Dispositif (10) selon l'une quelconque des revendications 2 à 4, **caractérisé en ce que** le prisme (34B) comporte une face de réflexion (40) qui est susceptible de dévier en direction de la face de sortie (38B) par réflexion totale les rayons lumineux fugitifs qui sont entrés dans le prisme (34B).

6. Dispositif (10) selon l'une quelconque des revendications 2 à 5, **caractérisé en ce que** le coude (28) du guide de lumière (14) comporte au moins deux facettes biseautées (30, 32), et **en ce que** le premier prisme (34A) et le deuxième prisme (34B) associés à chacune desdites au moins deux facettes biseautées (30, 32) sont réalisés venu de matière en une seule pièce (34).

7. Dispositif (10) selon la revendication précédente, **caractérisé en ce que** le premier prisme (34A) et le deuxième prisme (34B) comportent une face commune de sortie (38).

8. Dispositif (10) selon l'une quelconque des revendications précédentes, **caractérisé en ce que** le guide de lumière (14) comporte :
- une deuxième face d'extrémité d'introduction (26) de la lumière émise par une deuxième source lumineuse (12) qui est opposée à la première face d'extrémité d'introduction (26) ;
- un deuxième coude (28) qui est interposé entre la deuxième face d'entrée (26) et le tronçon d'émission (16) et qui présente un coin saillant vers l'extérieur qui est biseauté en présentant au moins une première facette (30, 32) afin de réfléchir en partie les rayons lumineux incidents axialement à l'intérieur du tronçon d'émission (16), l'autre partie des rayons lumineux fuyant à l'extérieur du guide de lumière (14) à travers la facette biseautée (30, 32) ;
- le tronçon d'émission (16) étant conformé en une boucle ouverte de manière que le deuxième coude (28) soit agencé à proximité du premier coude (28) ;
et **en ce que** les prismes associés à chacune desdites au moins une facettes biseautées des deux coudes (28) sont réalisés venus de matière en une seule pièce de manière à fermer la boucle formée par le tronçon d'émission (16).

## Claims

1. Lighting and/or signalling device (10), in particular for a motor vehicle, which can emit a longitudinal light beam, and comprises at least one source of light (12) which emits rays of light, and at least one linear light guide (14) inside which the rays of light emitted by the source of light (12) are propagated globally axially, the light guide (14) comprising:
- at least one first end face (26) for introduction of the light emitted by the source of light (12);
- at least one emission section (16), comprising a lateral surface which forms an emission face (20) of the light beam;
- at least one first bend (28) which is interposed between the first introduction face (26) and the emission section (16), and has a corner which projects towards the exterior and is bevelled, with at least one first facet (30, 32) in order to reflect totally a first part of the incident rays of light axially to the interior of the emission section (16), with the other part of the rays of light escaping towards the exterior of the light guide (14) via the said at least one bevelled facet (30, 32);
**characterised in that** it comprises means (34A, 34B) which are designed to modify the orientation of the rays of light which escape so that the rays of light which escape complete homogeneously and continuously the light beam which is emitted by the emission face (20) of the light guide (14).

2. Device (10) according to the preceding claim, **characterised in that** a prism (34A, 34B) is associated with each of the said at least one bevelled facets (30, 32), and **in that** the prism (30, 32) comprises a face (36A, 36B) for intake of the light, which is arranged opposite the said at least one associated bevelled facet (30, 32), such that the rays of light which escape enter inside the prism (34A, 34B) and an output face of the rays of light which escape, the output face (38A, 38B) being formed such as to distribute the rays of light which escape by refraction around the global direction of the light beam, in order to compete the light beam homogeneously.

3. Device (10) according to the preceding claim, **characterised in that** the rays of light which escape are deflected by refraction during their passage through the intake face (36A), such as to be oriented globally longitudinally when they reach the output face (38A) of the prism (34A).

4. Device (10) according to the preceding claim, **characterised in that** the intake face (36A) of the prism (34A) is inclined relative to the said at least one associated bevelled facet (32) of the light guide (14).

5. Device (10) according to any one of claims 2 to 4, **characterised in that** the prism (34B) comprises a reflection face (40) which can deflect in the direction of the output face (38B) by total reflection the escaping rays of light which have entered into the prism (34B).

6. Device (10) according any one of claims 2 to 5, **characterised in that** the bend (28) of the light guide (14) comprises at least two bevelled facets (30, 32), and **in that** the first prism (34A) and the second prism (34B) which are associated with each of the said at least two bevelled facets (30, 32) are produced in a single piece (34).

7. Device (10) according to the preceding claim, **characterised in that** the first prism (34A) and the second prism (34B) comprise a common output face (38).

8. Device (10) according to any one of the preceding claims, **characterised in that** the light guide (14) comprises:
- a second end face (26) for introduction of the light emitted by a second source of light (12) which is opposite the first end introduction face (26);
- a second bend (28) which is interposed between the second intake face (26) and the emission section (16), and has a corner projecting towards the exterior which is bevelled, and has at least a first facet (30, 32) in order to reflect partly the incident rays of light axially to the interior of the emission section (16), with the other part of the rays of light escaping to the exterior of the light guide (14) via the bevelled facet (30, 32);
- the emission section (16) being formed in an open loop, such that the second bend (28) is arranged in the vicinity of the first bend (28);
and **in that** the prisms which are associated with each of the said at least one bevelled facets of the two bends (28) are made in a single piece, such as to close the loop which is formed by the emission section (16).

## Patentansprüche

1. Beleuchtungs- und/oder Signalgebungsvorrichtung (10), insbesondere für ein Kraftfahrzeug, die ein längsgerichtetes Lichtbündel auszusenden vermag und die wenigstens eine Lichtstrahlen emittierende Lichtquelle (12) und wenigstens einen linienförmigen Lichtleiter (14) umfasst, in dem sich die von der Lichtquelle (12) emittierten Lichtstrahlen allgemein axial ausbreiten, wobei der Lichtleiter (14) umfasst:
- wenigstens eine erste Stirnfläche (26) zur Einkopplung des von der Lichtquelle (12) emittierten Lichts;
- wenigstens einen Emissionsabschnitt (16) mit einer Seitenfläche, die eine Lichtbündelemissionsfläche (20) bildet;
- wenigstens eine erste Biegung (28), die zwischen der ersten Einkopplungsfläche (26) und dem Emissionsabschnitt (16) eingefügt ist und die eine nach außen vorstehende Ecke aufweist, die abgeschrägt ist und dabei wenigstens eine erste Facette (30, 32) aufweist, um einen ersten Teil der axial auftreffenden Lichtstrahlen vollständig in das Innere des Emissionsabschnitts (16) zu reflektieren, wobei der andere Teil der Lichtstrahlen durch die wenigstens eine abgeschrägte Facette (30, 32) aus dem Lichtleiter (14) nach außen entweicht;
**dadurch gekennzeichnet, dass** sie Mittel (34A, 34B) umfasst, die zur Änderung der Ausrichtung der entweichenden Lichtstrahlen geeignet sind, damit die entweichenden Lichtstrahlen das von der Emissionsfläche (20) des Lichtleiters (14) emittierte Lichtbündel gleichmäßig und kontinuierlich ergänzen.

2. Vorrichtung (10) nach dem vorhergehenden Anspruch,
**dadurch gekennzeichnet, dass** jeder der wenigstens einen abgeschrägten Facetten (30, 32) ein Prisma (34A, 34B) zugeordnet ist, und dass das Prisma (34A, 34B) eine Lichteintrittsfläche (36A, 36B) aufweist, die gegenüber der wenigstens einen zugeordneten abgeschrägten Facette (30, 32) so angeordnet ist, dass die entweichenden Lichtstrahlen in das Prisma (34A, 34B) und eine Austrittsfläche (38A, 38B) der entweichenden Lichtstrahlen eindringen, wobei die Austrittsfläche (38A, 38B) so ausgebildet ist, dass die entweichenden Lichtstrahlen durch Lichtbrechung um die allgemeine Richtung des Lichtbündels herum verteilt werden, um das Lichtbündel gleichmäßig zu ergänzen.

3. Vorrichtung (10) nach dem vorhergehenden Anspruch,
**dadurch gekennzeichnet, dass** die entweichenden Lichtstrahlen durch Lichtbrechung beim Durchqueren der Eintrittsfläche (36A) so abgelenkt werden, dass sie allgemein in Längsrichtung ausgerichtet sind, wenn sie die Austrittsfläche (38A) des Prismas (34A) erreichen.

4. Vorrichtung (10) nach dem vorhergehenden Anspruch,
**dadurch gekennzeichnet, dass** die Eintrittsfläche (36A) des Prismas (34A) bezüglich der wenigstens einen zugeordneten abgeschrägten Facette (32) des Lichtleiters (14) geneigt ist.

5. Vorrichtung (10) nach einem der Ansprüche 2 bis 4,
**dadurch gekennzeichnet, dass** das Prisma (34B) eine Reflexionsfläche (40) aufweist, die die entweichenden Lichtstrahlen, die in das Prisma (34B) eingedrungen sind, durch Totalreflexion in Richtung der Austrittsfläche (38B) abzulenken vermögen.

6. Vorrichtung (10) nach einem der Ansprüche 2 bis 5,
**dadurch gekennzeichnet, dass** die Biegung (28) des Lichtleiters (14) wenigstens zwei abgeschrägte Facetten (30, 32) aufweist, und dass das erste Prisma (34A) und das zweite Prisma (34B), die jeder der wenigstens zwei abgeschrägten Facetten (30, 32) zugeordnet sind, materialeinheitlich in einem Stück (34) ausgebildet sind.

7. Vorrichtung (10) nach dem vorhergehenden Anspruch,
**dadurch gekennzeichnet, dass** das erste Prisma (34A) und das zweite Prisma (34B) eine gemeinsame Austrittsfläche (38) aufweisen.

8. Vorrichtung (10) nach einem der vorhergehenden Ansprüche,
**dadurch gekennzeichnet, dass** der Lichtleiter (14) umfasst:
- eine zweite Stirnfläche (26) zur Einkopplung des von einer zweiten Lichtquelle (12) emittieren Lichts, die der ersten Einkopplungsstirnfläche (26) entgegengesetzt ist;
- eine zweite Biegung (28), die zwischen der zweiten Einkopplungsfläche (26) und dem Emissionsabschnitt (16) eingefügt ist und die eine nach außen vorstehende Ecke aufweist, die abgeschrägt ist und dabei wenigstens eine erste Facette (30, 32) aufweist, um die axial einfallenden Lichtstrahlen teilweise in das Innere des Emissionsabschnitts (16) zu reflektieren, wobei der andere Teil der Lichtstrahlen durch die abgeschrägte Facette (30, 32) aus dem Lichtleiter (14) nach außen entweicht;
- wobei der Emissionsabschnitt (16) in einer offenen Schleife so ausgebildet ist, dass die zweite Biegung (28) in der Nähe der ersten Biegung (28) angeordnet ist;
und dass die Prismen, die jeder der wenigstens einen abgeschrägten Facette der beiden Biegungen (28) zugeordnet sind, materialeinheitlich in einem Stück so ausgebildet sind, dass die durch den Emissionsabschnitt (16) gebildete Schleife geschlossen ist.
